# EUROPEAN PATENT SPECIFICATION

(11) **EP 1 344 008 B1**
(45) Date of publication and mention of the grant of the patent: **27.09.2006**
(21) Application number: 00991369.0
(22) Date of filing: 22.12.2000
(51) Int. Cl.: F25D 23/06, B29C 51/14

(54) **AN INSULATED UNIT**
ISOLIEREINHEIT
UNITE ISOLEE

(43) Date of publication of application: 17.09.2003
(73) Proprietor: Arçelik A.S., 81719 Istanbul (TR)
(72) Inventor: ÖZKADI, Fatih, Arçelik A.S., 81719 Istanbul (TR); ODABA, Sibel, Arçelik A.S., 81719 Istanbul (TR); KÜCÜKPINAR, Esra, Arçelik A.S., 81719 Istanbul (TR)
(74) Representative: Zinsinger, Norbert
(86) International application number: PCT/TR2000/000064
(87) International publication number: WO 2002/052208

(56) References cited:
- EP-A- 0 029 152
- WO-A-00/60292
- US-A- 3 340 714
- US-A- 4 172 915
- US-A- 4 444 821
- US-A- 4 559 257
- US-A- 5 199 595
- US-A- 5 635 129
- US-A- 5 943 876
- PATENT ABSTRACTS OF JAPAN vol. 004, no. 176 (M-045), 5 December 1980 (1980-12-05) & JP 55 124635 A (KINUGAWA RUBBER IND CO LTD), 25 September 1980 (1980-09-25)

## Description

The present invention relates to an insulated unit according to the preamble of claim and a method to produce the unit.

Such a unit is known from document US 4 444 821.

Insulated units are widely used in our daily life to provide thermal, acoustic or other kind of insulation to make life more comfortable. Examples to such insulation units are refrigerators that are most commonly used as thermal insulators.

The insulation elements of refrigerators generally consist of closed celled foam encapsulated in between the inner and outer liners. The blowing agent, that usually has a high molecular weight, is being used in the foaming process of the closed celled foam. The gas that comes out during the reaction of the foam substance remains inside the closed cells. After the replacement of the blowing agents that contain chlorofluorocarbons with the non-fluorocarbon-containing materials (ex. cyclopentane) due to the environmental reasons; the remaining gas inside the closed cells seemed to weaken the thermal insulating properties of the refrigerators. This is because of the higher thermal conductivity values of the novel blowing agents.

Due to the new energy regulations, it is important to decrease the energy consumption of the refrigerators and freezers. Many different systems and applications have been studied and used in an attempt to increase the heat insulation behaviour of the doors and the walls of a refrigerator cabinet that was reduced in the recent past due to the usage of the chlorofluorocarbon-replacing blowing agent. The application of vacuum panels with very low thermal conductivity values in the insulation section of the refrigerators is an example of such systems. A vacuum panel is manufactured by packing materials such as fibreglass, silica, perlite, aerogel, open celled extruded polystyrene, open celled polyurethane, recycled urethane fluff (RUF) and chemical absorbents in a film like laminated plastic barrier or stainless steel. The material is then evacuated, sealed and kept at a constant vacuum level. The vacuum level depends on the specific filler insulation material. The applied pressure generally varies between 10⁻²-100 mbar. Since, in any case, the thermal conductivity is low, the evacuated insulators have the ability to reduce heat transmission from the ambient to the inner volume of a refrigerator. The vacuum panel applications are described in U54444821, EP0715138, U54681788. In WO 9736129, a vacuum insulation panel that has outside liners made of composite foil comprising a metallic layer, specially an aluminium layer coated by polyethylene polyester or a polypropylene layer on both sides: Since the thickness of the metal layer is low in vacuum insulation panel, it may cause a decrease in vacuum level. However besides its low thermal conductivity, the vacuum insulation panel technology has also its own drawbacks. It is very difficult to keep the vacuum panels at a constant vacuum level. In a period of 15-20 years, the possible gas sources both through the barrier material and the flanges can deteriorate the vacuum. In order to prevent this, it is possible to use materials called getters. The arrangement of the getter materials is given in EP0769117B1.

In EP 0757136, a component which has two covering sheets with a hard plastic foam core, is presented. It is a vacuum element with an open cell hard plastic foam core, whose external and internal sides are sealed by the metal cover sheets and whose longitudinal and transverse sides are sealed air tight by plastic and/or by an integral plastic foam layer and/or by plastic or rubber sheet material: The hard plastic foam core is continuously connected to a vacuum source, i.e. a vacuum pump. A perforated vacuum tube inserted into the core has connections to wall elements adjacent to the pipe with a connecting line to the pump.

In WO 00060292 a vacuum insulated unit comprising inner and outer liners made of a thermoplastic material is described. In order to reduce the permeation of atmospheric gases and water vapour, middle layers are inserted between inner and outer liners and insulating material. These middle layers may be metal sheets or plastic coated aluminium sheets. It is mentioned in this patent application that the metal layers could be applied to the inner and outer liners by sputtering technique.

WO 00/60292A discloses an insulated cabinet wherein the inner liner 16 and outer liner 15 of the cabinet are produced from thermoplastic material. The inner liner 16 and outer liner 15 are provided on their mutually facing inner sides with layers of 17 and 18 which are applied by co-extrusion or lamination.

US-A- 5 943 876 discloses vacuum insulation panels which are covered with an envelope 20. The flexible envelope 20 is actually a multi-layer film.

US-A- 4 444 821 discloses vacuum insulation panels wherein vacuum panel wall members 10a and 10b are multi layered. These wall members 10a and 10b, together with an edge sealing strip 20 form an interior to be filled with insulation material.

US-A- 5 635 129 discloses a twin-sheet thermoforming process wherein, two sheets of thermoplastic material are shaped by thermoforming while a heated thermoplastic insert material is placed in between the sheets in liquid form for reinforcing the resulting article.

The object of this invention is to produce an insulated unit wherein the permeation of atmospheric gases and water vapour into its inner filler material is controlled.

The insulated unit which is realised in order to attain the said object of the invention is illustrated in the attached drawings, wherein;

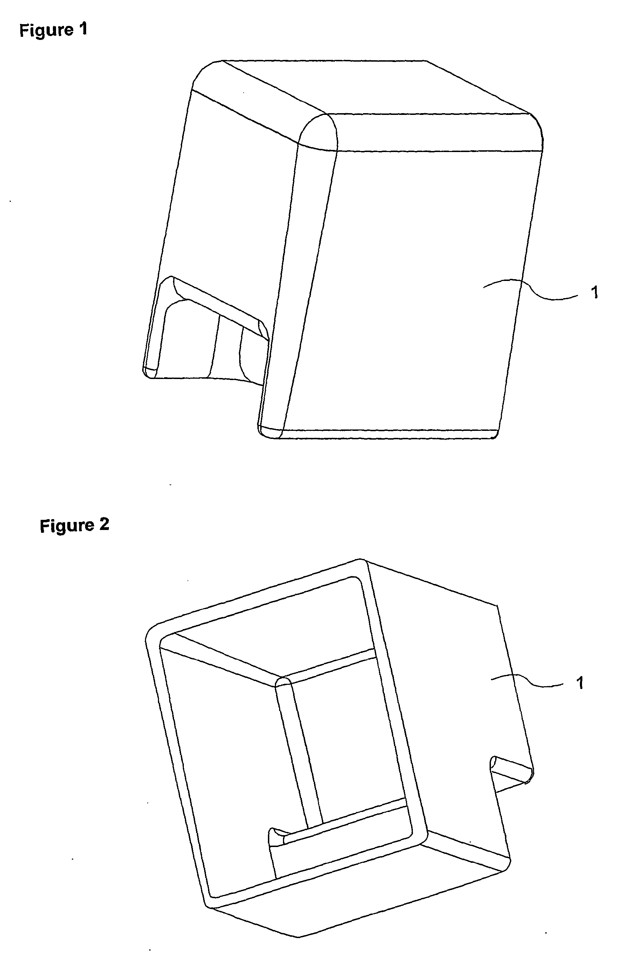

Figure 1, is the three dimensional back view of the insulated unit.
Figure 2, is the three dimensional front view of the insulated unit.

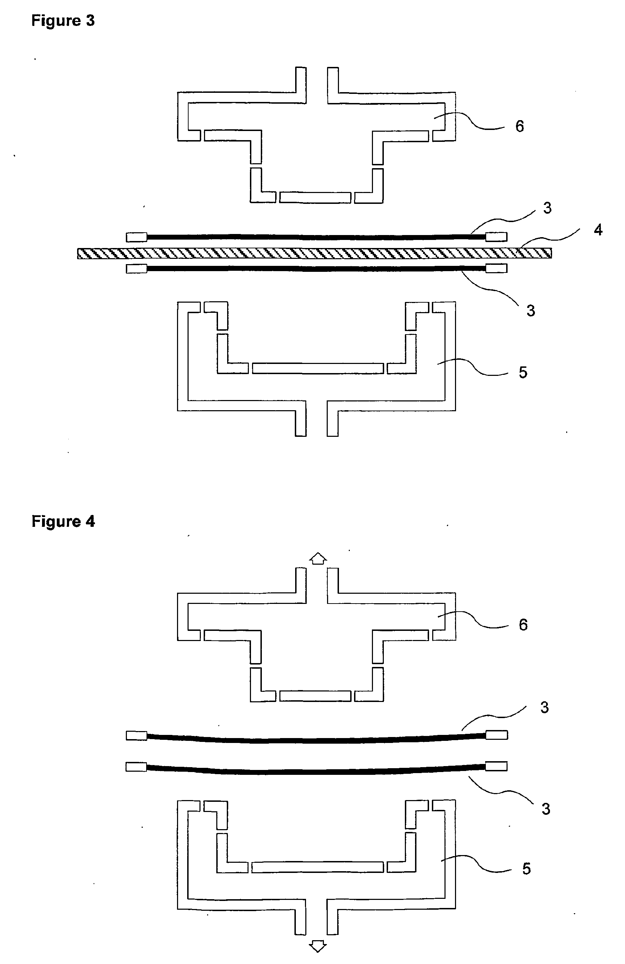

Figure 3, is the schematic view showing the plastic layers while they are being heated.
Figure 4, is the schematic view showing the plastic layers while they are being forced into the mold.
Figure 5a, is the schematic view of the film material cut in order to form a rectangular prism having an open surface.
Figure 5b, is the schematic view of the film material cut in order to form a rectangular prism having an open surface and flanges after being shaped.
Figure 5c, is the schematic view of the film material cut in order to form a refrigerator cabinet having a compressor space after being shaped.
Figure 5d, is the schematic view of the film material cut in a rectangle shape.
Figure 6, is the schematic view showing the plastic layers while being thermoformed.

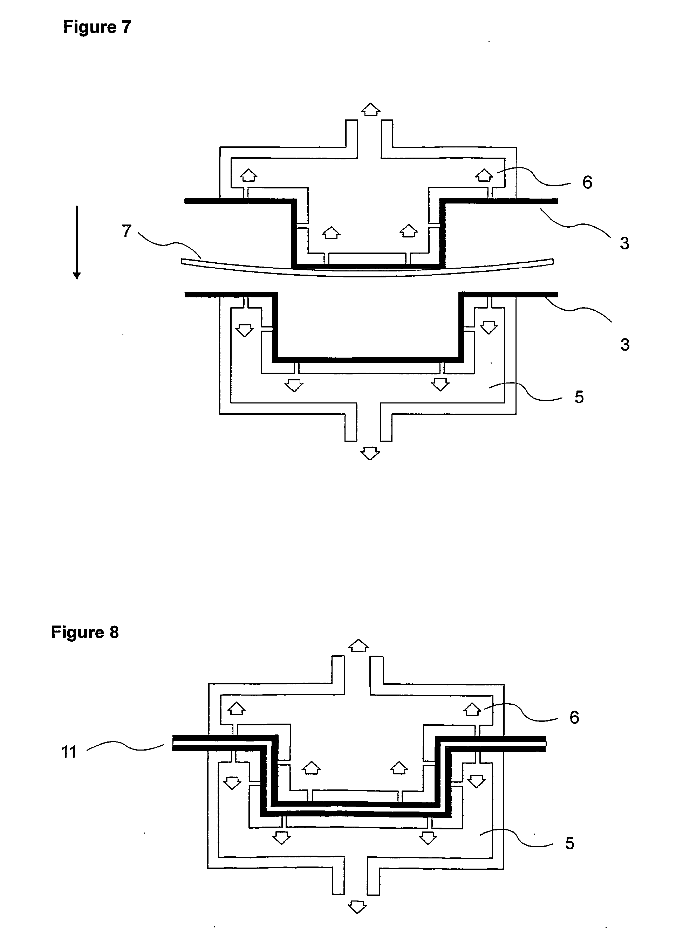

Figure 7, is the schematic view showing while one of the molds forces and pushes the metal layer towards the other mold.
Figure 8, is the schematic view when layers are combined to form the composite sheet.

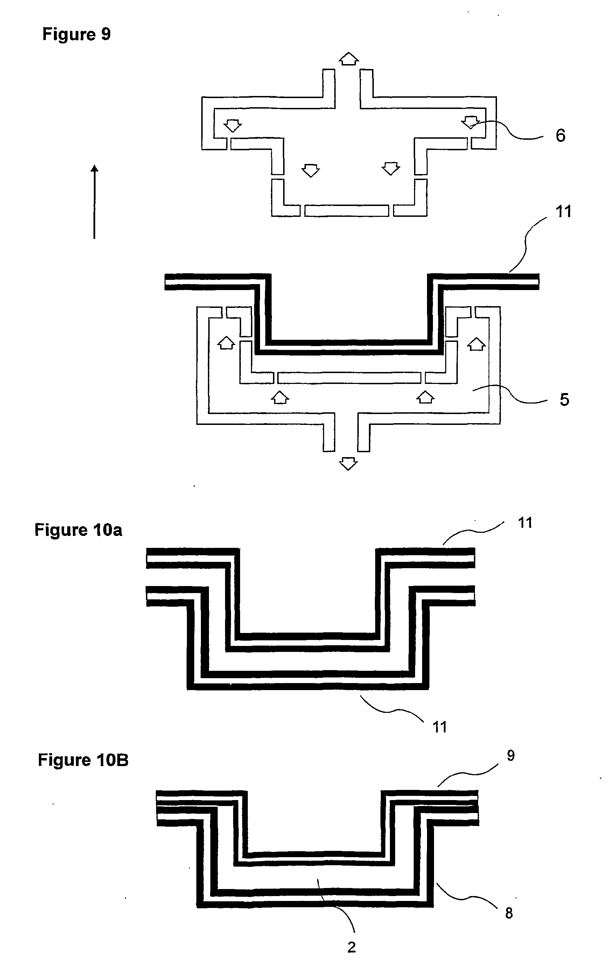

Figure 9, is the schematic view showing the molds while the composite sheets are being removed.
Figure 10a, is the schematic view showing the shaped composite sheets when they are brought together to form an insulated unit.
Figure 10b, is the schematic view showing the formed inner and outer liners.

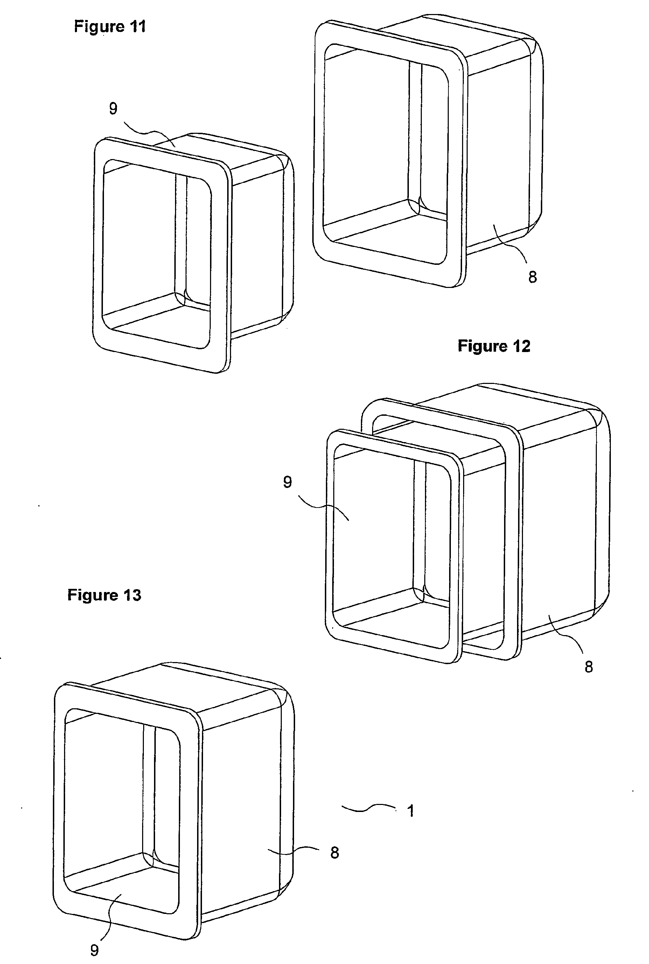

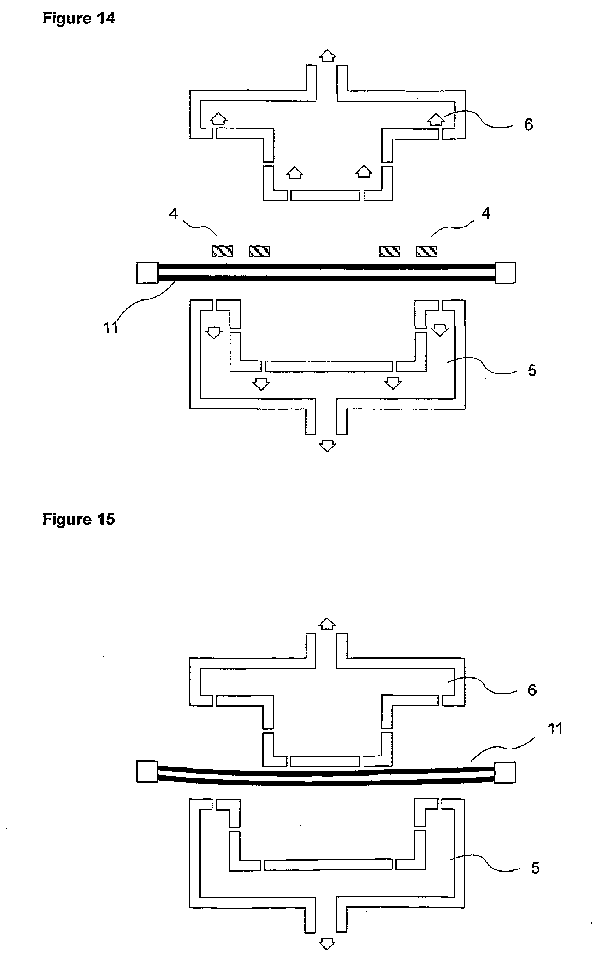

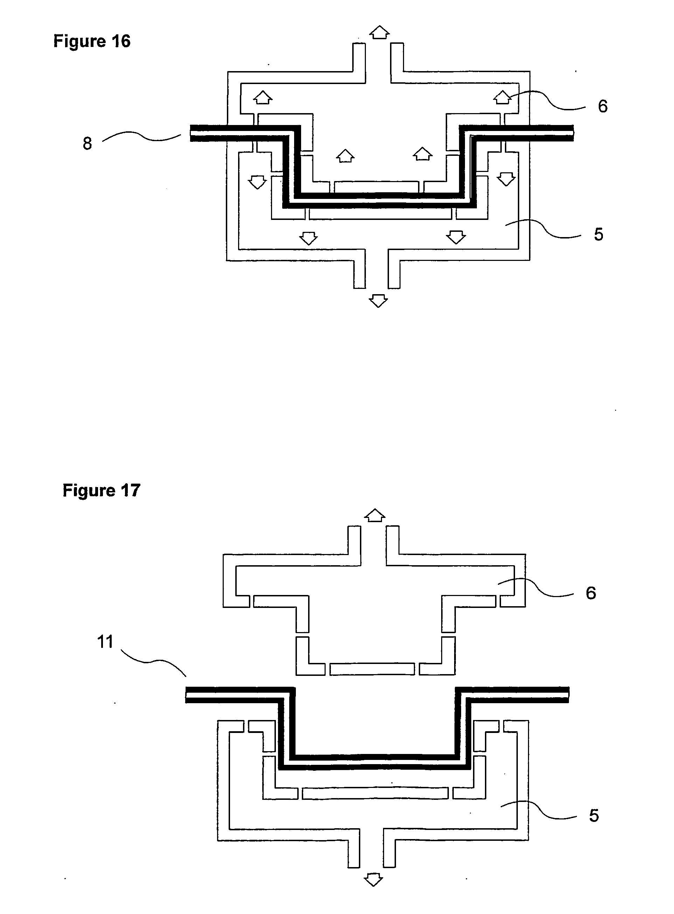

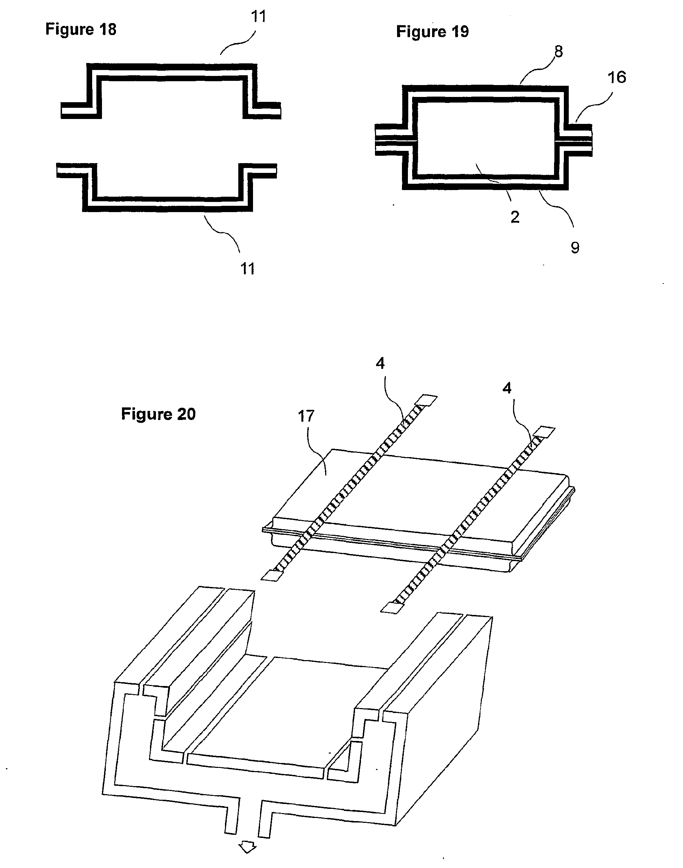

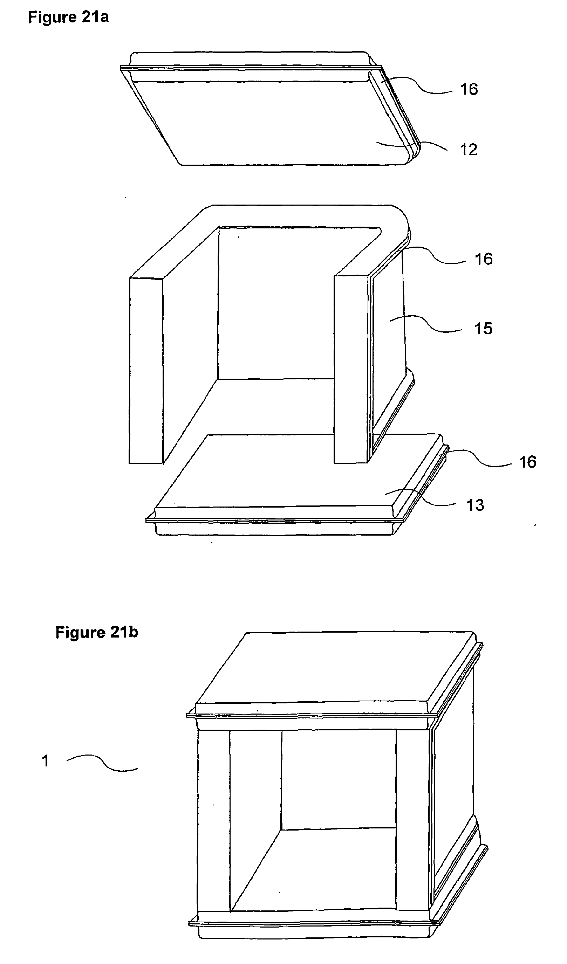

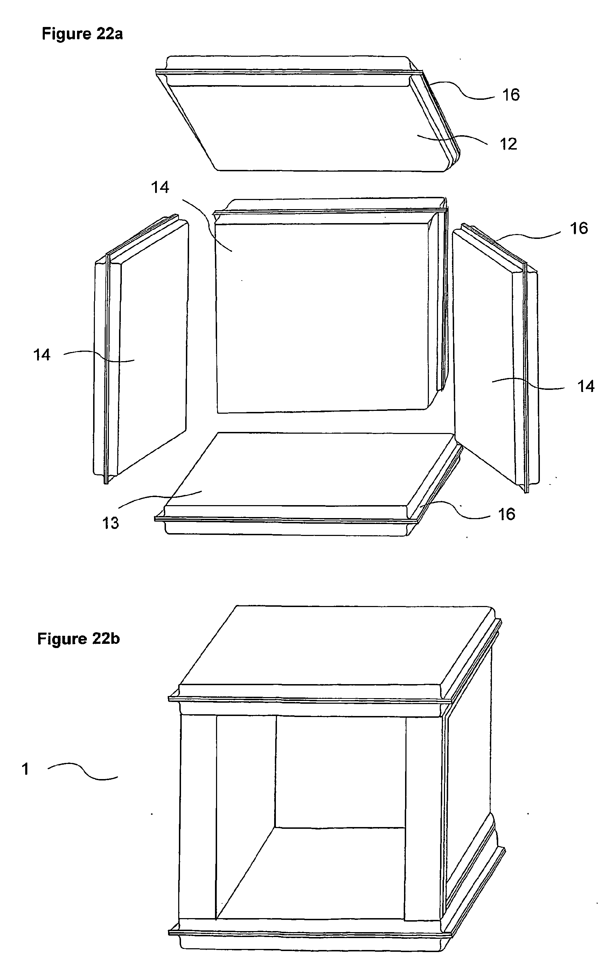

Figure 11, is the three dimensional front view of the inner and outer liners of an insulated unit.
Figure 12, is the three dimensional view showing the inner liner while being inserted into the outer liner.
Figure 13, is the three dimensional front view of an insulated unit formed after joining of the inner and outer liners and also after filling the insulation space with an inner filler material.

The components shown in the drawings have the following numbers;
1. Insulating unit
2. Insulating material
3. Plastic sheet
4. Heater
5. Lower mold
6. Upper mold
7. Film material
8. Outer liner
9. Inner liner
10. Insulation space
11. Composite sheet

An insulated unit preferably a thermally insulated unit (1) or, respectively, a device or apparatus with such a unit e.g. an insulated unit being built with liners, is described.

The said insulated unit (1) is obtained by using two liners, an inner liner (9), an outer liner (8), an insulation space (10) between them and an inner insulating material (2), to fill the insulation space (10).

The inner liner (9) and the outer liner (8) are obtained by forming a composite sheet (11) that includes two layers of plastic sheets (3) and one layer of film material (7) in order to control the permeation of atmospheric gasses and water vapour. The said film material (7) is a kind of a multi-layer structure that contains metal preferably an Aluminium layer and plastic preferably thin polyolefin containing layers on both sides. The thin polyolefin containing layers that are on both sides of the Aluminium layer are able to adhere on the plastic sheets (.3), when the plastics are still relatively soft and slightly warm.

The method to form the thermally insulated unit (1) is described below:

According to the method; a composite sheet (11) is formed by using a twin sheet thermoforming machine. The said thermoforming machine has a lower mold (5), an upper mold (6), and a heater (4). Lower (5) and upper molds (6) have vacuum units and heat exchangers inside their body. Preferably, the upper mold (6) is male and the lower mold (5) is female.

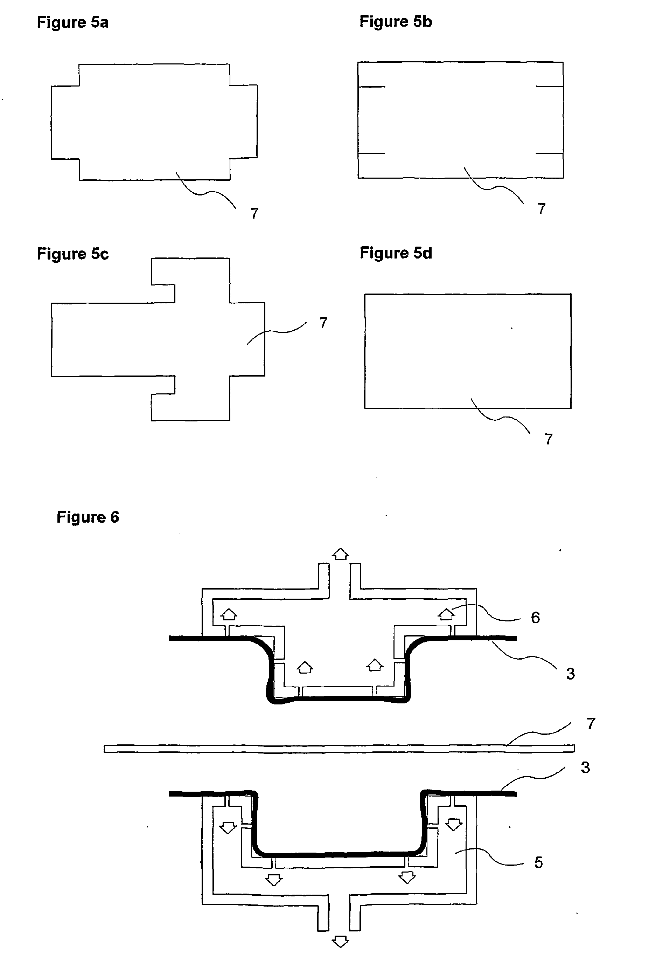

Before starting, the film material (7) has to be cut such that it can fit onto the upper (6) and lower (5) molds and it has certain shape (Figure 5a - 5d).

The upper (6) and lower (5) molds are heated up to the process temperature by heat exchangers inside them. Two plastic sheets (3) are placed over the heaters (4) of the thermoforming machine between the upper mold (6) and the lower mold (5). Plastic sheets (3) are heated until they are ready for the forming process and then heaters (4) are taken away and vacuum is applied inside the upper (6) and lower (5) molds for giving to the plastic sheets (3) the shape of the upper (6) and lower (5) molds. While forming the plastic sheets (3), the cut film material (7) is inserted between the upper (6) and lower (5) molds. One of the molds, preferably the upper mold (6), moves towards the lower mold taking the film material (7) in between. By this way, the film material (7) and the plastic sheets (3) take the shape of the upper (6) and lower (5) molds. Then, the upper (6) and lower (5) molds are separated from each other and the sandwiched structure called as composite sheet (11) inside them is obtained. The composite sheet (11) forms one of the liners (8,9) of the insulated unit (1). The same procedure has to be followed for forming the other liner (8,9) of the insulating unit (1). The inner (9) and outer liners (8) have different dimensions.

After obtaining the inner liner (9) and the outer liner (8) by thermoforming method, the inner liner (9) is inserted inside the outer liner (8). They are combined by using joining techniques such as laser, hot plate; vibration welding or by adhesives or sealants. A hermetically sealed space called as insulation space (10) is formed between inner and outer liner and this insulation space (10) is filled with a heat insulating material (2), such as open cell polyurethane, fumed silica, powder, aerogel, kieselguhr materials, etc. After the heat insulating material (2) is filled in between the formed inner liner (9) and the outer liner (8) parts of the insulated unit (1); preferably the whole insulation space (10) is evacuated by using a vacuum pump.

In the method, the vacuum pump used to evacuate the inner space (10) creates a very low pressure, which decreases the thermal conductivity of the inner insulating material (2). As the pressure inside the insulated unit (1) reaches below the critical pressure value of the inner insulating material (2), the vacuum pump is stopped (by means of a sensor that is connected to an electrical control unit.)

Since the film material (7) that is integrated in between the plastic sheets (3) prevents the permeation of gasses such as atmospheric gasses and water vapour into the evacuated region, if it is not used, the pressure created inside the insulation space (10) increases faster, because the water vapour and gas permeability of all the plastics are much more higher than a structure containing the film material (7). The pressure increase rate decreases tremendously by the application of the described invention, so the operating duration of the vacuum pump also decreases and that contributes to less energy consumption of the vacuum pump and the insulated unit (1).

## Claims

1. An insulated unit (1) comprising an inner liner (9), an outer liner (8), an insulation space (10) between the inner liner (9) and the outer liner (8) and an insulating material (2) filling the inner space (10), each of the inner liner (9) and the outer liner (8) being formed by a composite sheet (11) **characterized in that** the composite sheet includes two layers of plastic sheets (3) and one layer of film material (7) in between the two plastic sheets (3), which comprises a metal layer and plastic layers on both sides of the metal layer adhered to the plastic sheets (3).

2. An insulated unit according to Claim 1, **characterized in that** the metal layer of the film material (7) is Aluminium.

3. An insulated unit according to Claims 1 or 2, **characterized in that** the plastic layers coating both sides of the film material (7) are thin polyolefin containing layers.

4. A method to produce an insulated unit (1) according to Claim 1 by means of a thermoforming machine having a lower mold (5), an upper mold (6) and heaters (4), comprising the steps of:
- cutting the film material (7) in order to fit on to the upper (6) and lower (5) molds and according to the sizes of insulated unit (1),
- heating up the upper (6) and lower (5) molds by the heaters (4) to the process temperature,
- placing two plastic sheets (3) over the heaters (4) of the twin sheet thermoforming machine between the upper mold (6) and the lower mold (5),
- taking away the heaters (4) when the plastic sheets (3) are heated until they are ready for the forming process,
- applying vacuum inside the upper (6) and lower (5) molds for giving to the plastic sheets (3) the shape of the upper (6) and lower (5) molds,
- inserting the film material (7) between the upper (6) and lower (5) molds while forming the plastic sheets (3),
- lowering preferably the upper mold (6) towards the lower mold in order to sandwich the film material (7) in between,
- separating the two molds from each other,
- obtaining the shaped composite sheet (11) and forming the inner liner (9) or the outer liner (8) by the said shaped composite sheet (11),
- combining the inner liner (9) and the outer liner (8) preferably by using laser, hot plate or vibration welding or adhesives or sealants while obtaining an insulation space (10) between the inner liner (9) and the outer liner (8),
- filling the insulation space (10) with a heat insulating material (2) and evacuating the inner space (10) filled by insulating material (2) by using a vacuum pump.

## Patentansprüche

1. Isolierte Einheit (1), die eine innere Verkleidung (9), eine äußere Verkleidung (8), einen Isolationsraum (10) zwischen der inneren Verkleidung (9) und der äußeren Verkleidung (8) sowie ein Isolationsmaterial (2), mit dem der innere Raum (10) gefüllt ist, umfasst, wobei sowohl die innere Verkleidung (9) als auch die äußere Verkleidung (8) durch eine Verbundfolie (11) gebildet ist, **dadurch gekennzeichnet, dass** die Verbundfolie zwei Lagen aus Kunststofffolien (3) und zwischen diesen zwei Kunststofffolien (3) eine Lage aus Dünnschichtmaterial (7) umfasst, die ihrerseits eine Metallschicht und auf beiden Seiten dieser Metallschicht Kunststoffschichten, die an die Kunststofffolien (3) geklebt sind, umfasst.

2. Isolierte Einheit nach Anspruch 1, **dadurch gekennzeichnet, dass** die Metallschicht des Dünnschichtmaterials (7) Aluminium ist.

3. Isolierte Einheit nach Anspruch 1 oder 2, **dadurch gekennzeichnet, dass** die Kunststoffschichten, mit denen beide Seiten des Dünnschichtmaterials (7) überzogen sind, dünne polyolefinhaltige Schichten sind.

4. Verfahren zum Herstellen einer isolierten Einheit (1) nach Anspruch 1 mittels einer Wärmeformungsmaschine, die eine untere Gießform (5), eine obere Gießform (6) und Heizeinrichtungen (4) besitzt, wobei das Verfahren die folgenden Schritte umfasst:
- Zuschneiden des Dünnschichtmaterials (7), um es an die obere Gießform (6) und an die untere Gießform (5) anzupassen, und entsprechend den Abmessungen der isolierten Einheit (1),
- Erhitzen der oberen Gießform (6) und der unteren Gießform (5) durch die Heizeinrichtungen (4) auf die Prozesstemperatur,
- Anordnen von zwei Kunststofffolien (3) über den Heizeinrichtungen (4) der Doppelfolien-Wärmeformungsmaschine zwischen der oberen Gießform (6) und der unteren Gießform (5),
- Entnehmen der Heizeinrichtungen (4), wenn die Kunststofffolien (3) erhitzt sind, bis sie für den Formungsprozess bereit sind,
- Ausüben eines Unterdrucks in der oberen Gießform (6) und in der unteren Gießform (5), um den Kunststofffolien (3) die Form der oberen Gießform (6) bzw. der unteren Gießform (5) zu verleihen,
- Einführen des Dünnschichtmaterials (7) zwischen die obere Gießform (6) und die untere Gießform (5), während die Kunststofffolien (3) geformt werden,
- Absenken vorzugsweise der oberen Gießform (6) zu der unteren Gießform, um das Dünnschichtmaterial (7) dazwischen einzubetten,
- Trennen der zwei Gießformen voneinander,
- Erhalten der geformten Verbundfolie (11) und Bilden der inneren Verkleidung (9) oder der äußeren Verkleidung (8) durch die geformte Verbundfolie (11),
- Kombinieren der inneren Verkleidung (9) und der äußeren Verkleidung (8) vorzugsweise unter Verwendung eines Laser-, Heißplatten- oder Vibrationsschweißens oder von Klebstoffen oder von Versiegelungsmitteln, während zwischen der inneren Verkleidung (9) und der äußeren Verkleidung (8) ein Isolationsraum (10) erhalten wird,
- Füllen des Isolationsraums (10) mit einem wärmeisolierenden Material (2) und Evakuieren des mit dem isolierenden Material (2) gefüllten Innenraums (10) unter Verwendung einer Vakuumpumpe.

## Revendications

1. Une unité isolée (1) comprenant une enveloppe interne (9), une enveloppe externe (8), un espace d'isolation (10) entre l'enveloppe interne (9) et l'enveloppe externe (8), et un matériau isolant (2) remplissant l'espace intérieur (10), **caractérisée en ce que** l'enveloppe interne (9) et l'enveloppe externe (8) sont chacune formée par une feuille composite (11), cette feuille composite comportant deux couches de feuilles plastiques (3) et une couche de matériau pelliculaire (7) placée entre les deux feuilles plastiques (3) et qui comprend une couche métallique et des couches plastiques sur les deux côtés de la couche métallique adhérant aux feuilles plastiques (3).

2. Une unité isolée selon la revendication 1, **caractérisée en ce que** la couche métallique du matériau pelliculaire (7) est en aluminium.

3. Une unité isolée selon l'une ou l'autre des revendications 1 ou 2, **caractérisée en ce que** les couches plastiques recouvrant les deux côtés du matériau pelliculaire (7) sont des couches minces contenant des polyoléfines.

4. Une méthode pour produire une unité isolée selon la revendication 1, au moyen d'une machine de thermoformage comportant un moule inférieur (5), un moule supérieur (6) et des éléments chauffants (4), méthode comprenant les étapes consistant à :
- découper le matériau pelliculaire (7) de manière qu'il s'adapte sur le moule supérieur (6) et le moule inférieur (5) et conformément aux dimensions de l'unité isolée (1),
- échauffer le moule supérieur (6) et le moule inférieur (5) au moyen des éléments chauffants (4) jusqu'à la température d'opération,
- placer les deux feuilles plastiques (2) sur les éléments chauffants (4) de la machine de thermoformage à deux feuilles, entre le moule supérieur (6) et le moule inférieur (5),
- éloigner les éléments chauffants (4) quand les feuilles plastiques (3) sont échauffées jusqu'à ce qu'elles soient prêtes pour le processus de formage,
- appliquer un vide à l'intérieur du moule supérieur (6) et du moule inférieur (5), en vue de conférer aux feuilles plastiques la forme des moules supérieur (6) et inférieur (5),
- insérer le matériau pelliculaire (7) entre les moules supérieur (6) et inférieur (5), en mettant en forme les feuilles plastiques (3),
- abaisser de préférence le moule supérieur (6) vers le moule inférieur (5), en vue de prendre en sandwich entre eux le matériau pelliculaire (7),
- séparer les deux moules l'un de l'autre,
- prélever la feuille composite conformée (11) et mettre en forme l'enveloppe intérieure (9) ou l'enveloppe extérieure (8) au moyen de ladite feuille composite conformée (11),
- réunir l'enveloppe intérieure (9) et l'enveloppe extérieure (8), de préférence en utilisant un laser, une plaque chaude ou une soudure par vibrations ou des adhésifs ou des substances pour joints, tout en ménageant un espace d'isolation (10) entre l'enveloppe intérieure (9) et l'enveloppe extérieure (8),
- remplir l'espace d'isolation (10) d'un matériau isolant thermiquement (2) et mettre sous vide l'espace intérieur (10) rempli de matériau isolant (2) en utilisant une pompe à vide.
